# EUROPÄISCHE PATENTSCHRIFT

(11) **EP 0 741 443 B1**
(45) Veröffentlichungstag und Bekanntmachung des Hinweises auf die Patenterteilung: **24.11.1999**
(21) Anmeldenummer: 96106218.9
(22) Anmeldetag: 19.04.1996
(51) Int. Cl.: H02K 15/12

(54) **Stillstandsheizung für eine geschlossene elektrische Maschine**
Standstill heating for a fully enclosed machine
Chauffage d'arrêt pour une machine électrique entièrement fermée

(30) Priorität: 02.05.1995 DE 19515938
(43) Veröffentlichungstag der Anmeldung: 06.11.1996
(73) Patentinhaber: SIEMENS AKTIENGESELLSCHAFT, 80333 München (DE)
(72) Erfinder: Hilneder, Siegfried, 91126 Schwabach (DE)

(56) Entgegenhaltungen:
- DE-U- 1 883 897
- DE-U- 8 808 813
- MACHINERY, Nr. 102, 13.Februar 1963, BURGESS HILL GB, Seite 376 XP002010683 "heater elements for electric motors"
- PATENT ABSTRACTS OF JAPAN vol. 010, no. 108 (E-398), 23.April 1986 & JP-A-60 245446 (HITACHI SEISAKUSHO KK), 5.Dezember 1985,

## Beschreibung

Die Erfindung betrifft eine Stillstandsheizung für eine geschlossene elektrische Maschine gemäß dem Oberbegriff des Anspruches 1.

Eine solche Stillstandsheizung ist durch das DE-U-1883 897 bekannt. Bei dieser bekannten Stillstandsheizung sind an dem Spreizring nach radial innen ragende Haltelaschen vorgesehen, an denen mehrfach umgelenkte Heizstäbe befestigt sind. Durch die Mehrfachumlenkung der Heizstäbe wird die für eine bestimmte notwendige Heizleistung der Stäbe erforderliche Länge erzielt. Eine derartige Ausführungsform der Heizstäbe bedingt einen hohen Fertigungsaufwand. Die Versorgungungsleitungen sind über entsprechende, ebenfalls nach radial innen ragende Anschlußstücke mit den Heizstäben verbunden. Bei dieser Verbindungsart sind die Versorgungsleitungen teilweise freihängend geführt. Hierdurch ist der notwendige Sicherheitsabstand dieser Versorgungsleitungen gegenüber den mit Hochspannung beaufschlagten Wickelköpfen der Maschine nicht mit ausreichender Sicherheit gewährleistet.

Der Erfindung liegt die Aufgabe zugrunde, eine Stilltandsheizung der gattungsgemäßen Art so weiterzubilden, daß Heizstäbe mit einer wesentlich einfacheren Ausführungsform eingesetzt werden können.

Die Lösung der gestellten Aufgabe gelingt durch die im Kennzeichen des Anspruches 1 angegebenen Merkmale. Die Heizelemte können somit einfach in Umfangsrichtung des Standgehäuses verlaufend in die Aufnahmerillen eingefügt werden. Die notwendige Länge läßt sich durch die Anordnung von mehreren Heizelementen erreichen, die mechanisch parallel verlaufend an den Traglaschen angeordnet und elektrisch in Reihe geschaltet sind, wobei je nach Gegebenheiten auch eine Reihen-Parallelschaltung oder auch eine reine Parallelschaltung in Frage kommt.

Die Halterung des Heizelementes an den Traglaschen kann zweckmäßigerweise durch ein Verstemmen des Öffnungsrandes der Aufnahmerillen erfolgen. Dadurch erübrigen sich gesondert anzubringende Halterungselemente.

Die Montage des Spreizringes am Maschinengehäuse wird dadurch wesentlich vereinfacht, daß die an den Trennschlitz des Spreizringes angrenzenden Enden desselben mit einer verstellbaren Spreizvorrichtung verbunden sind. Eine verstellbare Spreizvorrichtung ergibt sich auf besonders einfache Weise dadurch, daß an dem einen, an den Trennschlitz angrenzenden Ende des Spreizringes eine Gewindemutter verdrehbar angeordnet ist, die mit einem an dem anderen, an den Trennschlitz angrenzenden Ende des Spreizringes vorgesehenen Gewinde verschraubbar ist. Damit ist einerseits das für die Halterung des Spreizringes notwendige Verspannen leicht auszuführen und zum anderen kann eine gewünschte Spannkraft erzielt werden, wobei dies unabhängig von irgendwelchen Fertigungstoleranzen der am Ständergehäuse vorgesehenen Ringnut möglich ist.

Dadurch, daß die Versorgungsleitungen mittels einer Bandage eng am Spreizring gehalten sind, wird der notwendige Sicherheitsabstand dieser Leitungen gegenüber Hochspannung führenden Wicklungsteilen der Maschine gewährleistet.

Anhand eines in der Zeichnung dargestellten Ausführungsbeispieles wird die Erfindung nachfolgend näher beschrieben. Es zeigt:

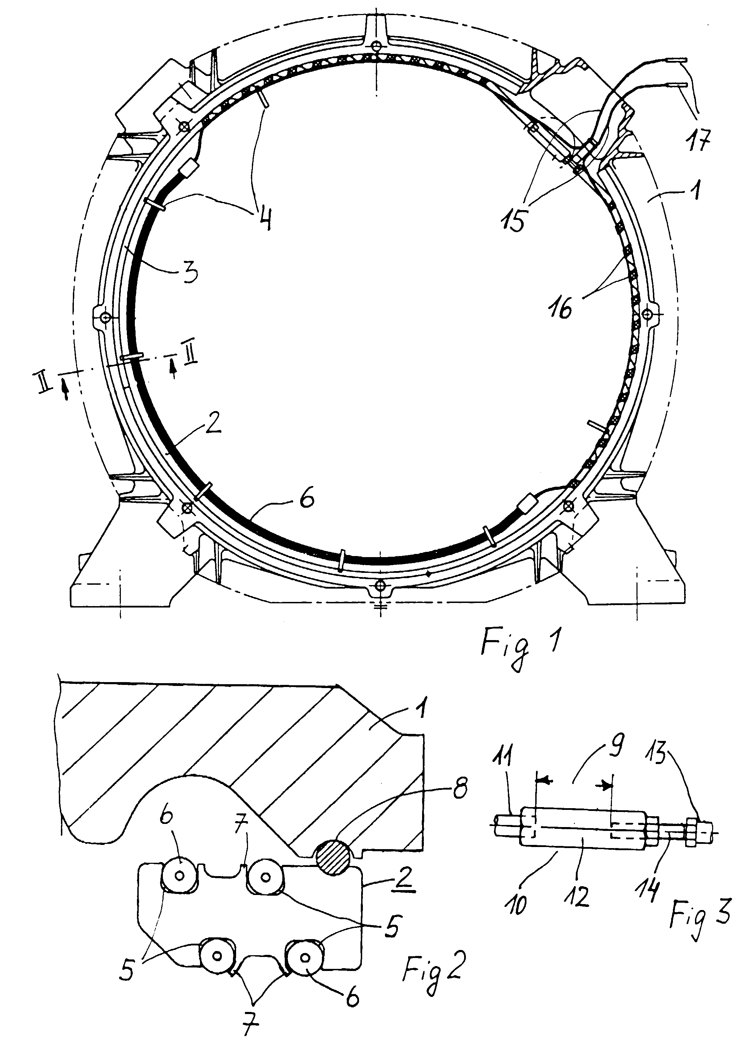

- FIG 1: eine an eine elektrische Maschine angebaute Stillstandsheizung,
- FIG 2: die Anordnung einer Stillstandsheizung in einem Detailschnitt entlang der Linie II-II in FIG 1,
- FIG 3: eine verstellbare Spreizvorrichtung in Einzeldarstellung.

Mit 1 ist das Ständergehäuse einer elektrischen Maschine bezeichnet. Zumindest an einer Stirnseite dieses Ständergehäuses 1 ist eine Stillstandsheizung 2 angeordnet. Diese Stillstandsheizung 2 weist einen Spreizring 3 auf, an dem über seinen Umfang verteilt in die Achsrichtung der Maschine weisende Traglaschen 4 vorgesehen sind. Die Traglaschen 4 können an dem Spreizring 3 angeschweißt sein.

An den einzelnen Traglaschen 4 sind Aufnahmerinnen 5 vorgesehen, in die ein Heizelement 6 eingelegt ist. Durch Verstemmen des Öffnungsrandes 7 der Aufnahmerinnen 5, wie dies in FIG 2 an den untenliegenden Aufnahmerinnen 5 gezeigt ist, wird das Heizelement 6 in den Aufnahmerinnen 5 gehalten. Das Heizelement 6 kann als Kabel oder auch als formbeständiger Heizstab ausgebildet sein.

Das Heizelement 6 kann vor dem Einbau des Spreizringes 3 in das Ständergehäuse 1 ungehindert auf die Traglaschen 4 aufgebracht werden. Danach wird der Spreizring 3 in eine im Bereich der Stirnseite innen am Ständergehäuse 1 ausgebildete Ringnut 8 eingesetzt. Mittels einer am Trennschlitz 9 des Spreizringes 3 vorgesehenen verstellbaren Spreizvorrichtung wird der Spreizring 3 soweit aufgespreizt, daß er in der Ringnut 8 festgespannt wird. Die Spreizvorrichtung besteht aus einer an dem einen an den Trennschlitz 9 angrenzenden Ende 11 des Spreizringes 3 verdrehbar angeordneten Gewindemutter 12 und einem am anderen Ende 13 des Spreizringes vorgesehenen Gewinde 14. Zum entsprechenden Festspannen des Spreizringes 3 wird die Gewindemutter 12 solange verdreht, bis der gewünschte Sitz des Spreizringes 3 in der Ringnut 8 erreicht ist.

Das Aufbringen des Heizelementes 6 auf die Traglaschen 4 erfordert lediglich eine bogenförmige Ausbildung der Heizelemente 6. Werden als Heizelemente 6 Heizstäbe verwendet, dann können diese ohne Schwierigkeiten in der erforderlichen Bogenform ausgeführt werden. Die notwendige Heizleistung wird dann durch den Einsatz einer entsprechenden Anzahl von Heizstäben erzielt.

Die zur Speisung der Heizelemente notwendigen Versorgungsleitungen 15 sind mittels einer um den Spreizring 3 gewickelten Bandage 16 eng am Spreizring 3 gehalten. Mit ihren Enden 17 sind die Versorgungsleitungen 15 in einem in der Zeichnung nicht dargestellten Klemmenkasten an entsprechende Spannungsklemmen angeschlossen.

## Patentansprüche

1. Stillstandsheizung für eine geschlossene elektrische Maschine, welche Heizung mindestens ein über Versorgungsleitungen (15) von einem Klemmenkasten der Maschine aus elektrisch gespeistes Heizelement aufweist, das mittels Halteelemente (4) an einem im Ständergehäuse (1) der Maschine festgeklemmten, mit einem Trennschlitz versehenen Spreizring (3) gehalten ist, **dadurch gekennzeichnet,**
daß als Halteelemente (4) an dem Spreizring (3) in Achsrichtung der Maschine abstehende Traglaschen (4) vorgesehen sind, die Aufnahmerillen (5) aufweisen in denen das Heizelement (6) in Umfangsrichtung des Spreizringes (3) verlaufend gehalten ist und wobei die Heizelemente (6) elektrisch verschaltbar sind.

2. Stillstandszeizung nach Anspruch 1,
**dadurch gekennzeichnet,**
daß das Heizelement (6) durch Verstemmen des Öffnungsrandes (7) der Aufnahmerillen (5) in diesen gehalten ist.

3. Stillstandsheizung nach einem der vorhergehenden Ansprüche,
**dadurch gekennzeichnet,**
daß die an den Trennschlitz (9) des Spreizringes (3) angrenzenden Enden (11 und 13) desselben mittels einer verstellbaren Spreizvorrichtung (10) verbunden sind.

4. Stillstandsheizung nach Anspruch 3,
**dadurch gekennzeichnet,**
daß an dem einen, an den Trennschlitz (9) angrenzenden Ende (11) des Spreizringes (3) eine Gewindemutter (12) verdrehbar angeordnet ist, die mit einem an dem anderen an den Trennschlitz (9) angrenzenden Ende (13) des Spreizringes (3) vorgesehenen Gewinde (14) verschraubbar ist.

5. Stillstandsheizung nach einem der vorhergehenden Ansprüche,
**dadurch gekennzeichnet,** daß die Versorgungsleitungen (15) mittels einer Bandage (16) eng am Spreizring (3) gehalten sind.

## Claims

1. Space heater for an enclosed electrical machine, which heater has at least one heating element supplied electrically by way of supply lines (15) from a terminal box of the machine, which heating element is supported by means of supporting elements (4) on an expanding ring (3) clamped in the stator housing (1) of the machine and provided with a separating slot, characterized in that carrying brackets (4) are provided as supporting elements (4) on the expanding ring (3), which project in the axial direction of the machine and have receiving grooves (5) in which the heating element (6) is supported so that it extends in the circumferential direction of the expanding ring (3), and wherein the heating elements (6) can be electrically connected.

2. Space heater according to claim 1, characterized in that the heating element (6) is supported in the receiving grooves (5) by way of caulking of the opening edge (7) of the receiving grooves (5).

3. Space heater according to one of the preceding claims, characterized in that the ends (11 and 13) of the expanding ring (3) which adjoin the separating slot (9) of the expanding ring (3) are connected by means of an adjustable expanding device (10).

4. Space heater according to claim 3, characterized in that a threaded nut (12) is rotatably arranged on the one end (11) of the expanding ring (3) which adjoins the separating slot (9), which threaded nut can be screwed with a thread (14) provided at the other end (13) of the expanding ring (3) which adjoins the separating slot (9).

5. Space heater according to one of the preceding claims, characterized in that the supply lines (15) are tightly supported on the expanding ring (3) by means of a banding (16).

## Revendications

1. Chauffage d'arrêt pour une machine électrique fermée, ledit chauffage présentant au moins un élément chauffant qui est alimenté électriquement à partir d'un bornier de la machine, par l'intermédiaire de conducteurs d'alimentation (15), et est retenu, au moyen d'éléments de retenue (4), sur une bague extensible (3) munie d'une fente de séparation et enchâssée fermement dans la carcasse (1) du bâti de la machine, caractérisé par le fait
que des pattes de support (4) saillant dans la direction axiale de la machine, prévues sur la bague extensible (3) en tant qu'éléments de retenue (4), comportent des rainures réceptrices (5) dans lesquelles l'élément chauffant (6) est retenu en s'étendant dans le sens circonférentiel de la bague extensible (3), les éléments chauffants (6) pouvant être connectés électriquement.

2. Chauffage d'arrêt selon la revendication 1,
caractérisé par le fait
que l'élément chauffant (6) est retenu dans les rainures réceptrices (5) par matage du bord (7) de l'ouverture de ces dernières.

3. Chauffage d'arrêt selon l'une des revendications précédentes,
caractérisé par le fait
que les extrémités (11 et 13) de la bague extensible (3), adjacentes à la fente de séparation (9) de la bague, sont reliées au moyen d'un dispositif réglable d'écartement (10).

4. Chauffage d'arrêt selon la revendication 3,
caractérisé par le fait
qu'un écrou (12), pouvant tourner sur l'une (11) des extrémités de la bague extensible (3) qui est adjacente à la fente de séparation (9), peut être solidarisé par vissage avec un filetage (14) prévu à l'autre extrémité (13) de la bague extensible (3), adjacente à la fente de séparation (9).

5. Chauffage d'arrêt selon l'une des revendications précédentes,
caractérisé par le fait que les conducteurs d'alimentation (15) sont étroitement retenus sur la bague extensible (3), au moyen d'un bandage (16).
